# EUROPEAN PATENT SPECIFICATION

(11) **EP 2 895 952 B1**
(45) Date of publication and mention of the grant of the patent: **14.11.2018**
(21) Application number: 13786752.9
(22) Date of filing: 06.09.2013
(51) Int. Cl.: G06F 9/44, G06F 9/451, G06F 3/0481, H04M 1/725, G06F 3/0482

(54) **DISPLAYING AN APPLICATION SET IDENTIFIER**
ANZEIGE EINES ANWENDUNGSSET-IDENTIFIKATORS
AFFICHAGE D'UN IDENTIFIANT D'ENSEMBLE D'APPLICATIONS

(30) Priority: 11.09.2012 CN 201210334940; 05.09.2013 US 201314019434
(43) Date of publication of application: 22.07.2015
(73) Proprietor: Alibaba Group Holding Limited, Grand Cayman (KY)
(72) Inventor: ZHENG, Yuanlong, Hangzhou (CN)
(74) Representative: Freeman, Jacqueline Carol
(86) International application number: PCT/IB2013/002270
(87) International publication number: WO 2014/041426

(56) References cited:
- EP-A2- 2 426 898
- US-A1- 2010 248 787

## Description

### CROSS REFERENCE TO OTHER APPLICATIONS

This application claims priority to People's Republic of China Patent Application No. 201210334940.5 entitled A METHOD AND DEVICE OF PROCESSING DATA, filed September 11, 2012.

### FIELD OF THE INVENTION

The present application relates to the field of communications. In particular, it relates to techniques for presenting information.

### BACKGROUND OF THE INVENTION

Typically, the display screen space of a mobile device is quite limited. As a result, the information that is desired to be displayed at a mobile device may be limited by the screen size. When a user downloads an application onto the mobile device, an icon representing that application is typically displayed on the user interface (e.g., desktop) of the mobile device. As more applications are installed onto the mobile device, their respective icons take up more and more of the limited display area of the screen.

Conventionally, when an application installed on a mobile device receives a notification message, a visual alert is generated and displayed over at least a portion of an icon of the application. The visual alert notifies a user that a notification message has been received for the application. When there are too many icons being displayed, the user of the mobile device may inadvertently overlook this alert. Therefore, the user may fail to notice the notification message corresponding to the visual alert and delay his or her discovery or viewing of the notification message.

Furthermore, if a user is browsing a web page in a web browser application executing at a mobile device and a notification message is received for a particular application, the user may not be able to view the visual alert associated with the application because typically, the icons that represent various applications are not displayed when the web browser application is opened. Often, a user must first close the web browser application before he or she may view the icons associated with the other applications and then learn of any notification messages received for those applications. Due to the lack of simultaneous display of a web browser application and icons of other applications, the user cannot be promptly notified of the notification message received for another application so long as the web browser application is opened. As a result, the user is prevented from viewing such notification messages in a timely manner while the web browser application is opened, which may be detrimental to the user particularly if a notification message requires immediate attention from the user.

Moreover, if a user who is browsing web pages using a web browser application executing on the mobile device wanted to switch to another application, the user would first need to exit from the web browser application before finding the icon of the desired application on the user interface of the mobile device. This sequence requires a few steps and may not be very efficient.

Sometimes, a user's interactions with a particular web page that is opened with the web browser application may affect (e.g., generate a notification message for) another application that is also installed at the mobile device. However, typically, even though such interactions on the web page affect the application, any effects on the application may not be displayed while the web browser application is still opened. To view the effects on the application, the user would still need to first exit from the web browser application before finding the icon of the desired application on the user interface of the mobile device. As a result, the user will not be able to promptly learn of the operation's effects on the application.

The present invention is defined by the claims.

### BRIEF DESCRIPTION OF THE DRAWINGS

Various embodiments of the invention are disclosed in the following detailed description and the accompanying drawings.
FIG. 1 is a diagram showing an embodiment of a system for displaying an application set identifier.
FIG. 2 is a flow diagram showing an embodiment of a process for displaying an application set identifier.
FIG. 3 shows an example of an application set identifier and an application identifier.
FIG. 4 is a flow diagram showing an embodiment of a process for accessing an application included in an application set.
FIG. 5 includes diagrams showing two images associated with an application set identifier.
FIG. 6 includes diagrams showing two images associated with an application set identifier in a designated area of a display screen.
FIG. 7 is a flow diagram showing an example of a process for displaying an application set identifier.
FIGS. 8 and 9 show a series of display screens of a device subsequent to a user operation within a home page application associated with an application set identifier.
FIG. 10 is a flow diagram showing an embodiment of a process of moving content displayed at a display screen based on a user selection received with respect to the application set identifier.
FIG. 11 is a diagram showing an example of a user selection associated with pushing the application set identifier in an up direction.
FIG. 12 is a flow diagram showing an embodiment of a process of refreshing content based on a user selection received with respect to the application set identifier.
FIG. 13 is a diagram showing an example of a user selection associated with moving the application set identifier to cause displayed content to refresh.
FIG. 14 is a diagram showing an embodiment of a system for displaying an application set identifier.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Embodiments of displaying an application set identifier are described herein. In various embodiments, an "application set" refers to a plurality of applications that are determined to be included in a group and to be represented by a single identifier. In various embodiments, an "application set identifier" refers to one or more images that represent the application set and are presented as an overlay over a portion (e.g., in a designated position) of the display screen of a mobile device. For example, the application set identifier comprises a single image that is associated with the application set and not particular to any individual application included in the application set. For example, the application set identifier may be presented over a mobile device interface (e.g., desktop), over an opened web browser application, and/or over another type of application that is currently being engaged by the user. In various embodiments, in the event a notification is received for an application included in the application set, the image associated with the application set identifier is (e.g., temporarily) switched to an image associated with the identifier associated with the application with which the notification is associated. Because the application set identifier may be presented on the display screen of the mobile device (e.g., over the desktop of the mobile device or another application that is currently being accessed), the notification associated with the affected application included in the application set will be displayed for the user despite another application being currently accessed. Therefore, the presentation of multiple applications may be reduced into a single application set identifier that is displayed at the mobile device user interface and the application set identifier may be displayed conspicuously so that notifications associated with the applications included in the application set may also be conspicuously displayed in the same area of the screen associated with the application set identifier.

In some embodiments, the application set identifier is displayed as a first image that is generic to individual applications and in the event that the first image is selected by a user, the application set identifier may be represented by a second image that includes various portions, where each portion is associated with the identifier of an application that is included in the application set associated with the application set identifier. Therefore, while the application set identifier is displayed as a single general image, once the user interacts with the application set identifier, the display of the application set identifier is transformed to the second image that includes images associated with respective applications of the application set so that the user may select and access an individual application by selecting on the appropriate portion (e.g., application identifier) of the second image.

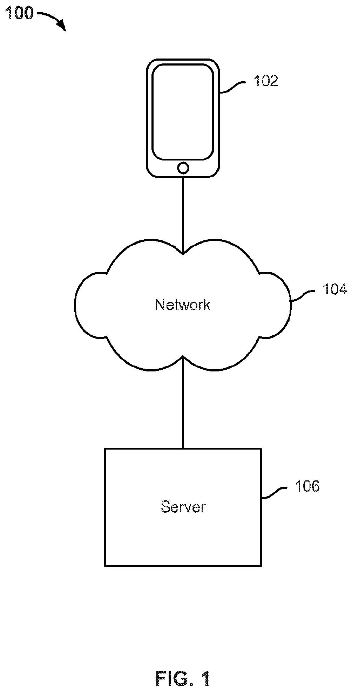

FIG. 1 is a diagram showing an embodiment of a system for displaying an application set identifier. In the example, system 100 includes device 102, network 104, and server 106. Network 104 includes high speed data networks and/or telecommunications networks.

Device 102 is configured to communicate with server 106 over network 104. Examples of device 102 include a smart phone, a mobile device, a tablet device, a computer, or any other type of computing device. Applications are executing on device 102 and each application may be configured to provide a service for the user of device 102. An application may comprise a software application. An application set identifier may be executing at device 102 and is configured to represent multiple applications (e.g., that are selected to be included in the application set) in a designated area of the display screen of device 102. For example, the application set identifier functionalities can be provided by an application and/or computer code that is executing at device 102 and/or downloaded from server 106. For example, server 106 is associated with providing an e-commerce platform.

For example, a set of applications related by a common attribute (e.g., the applications in the set can be associated with the same e-commerce platform) can be selected to be included in the application set. Each of the applications associated with the application set is downloaded to and/or installed at device 102 if it is not already downloaded to and/or installed at device 102. As will be described in further detail below, the application set identifier is displayed in the designated area of the display screen of device 102 in a manner that overlays other content displayed at the display screen. For example, the application set identifier may be displayed as an image or an icon. In response to a notification associated with a particular application of the application set being received at device 102, the display of the application set identifier is switched to an identifier associated with that particular application. For example, the notification may be generated and sent by server 106. Switching the display of the application set identifier to the display of the identifier of a particular application in the designated area of the application set identifier can notify the user of device 102 that a notification has been received with respect to that particular application in the application set. To access the application for which the notification was received, the user may select the displayed identifier of that application. The application set identifier enables the display of multiple application identifiers and notifications for the corresponding applications to be reduced to a single image that is prominently displayed for the user.

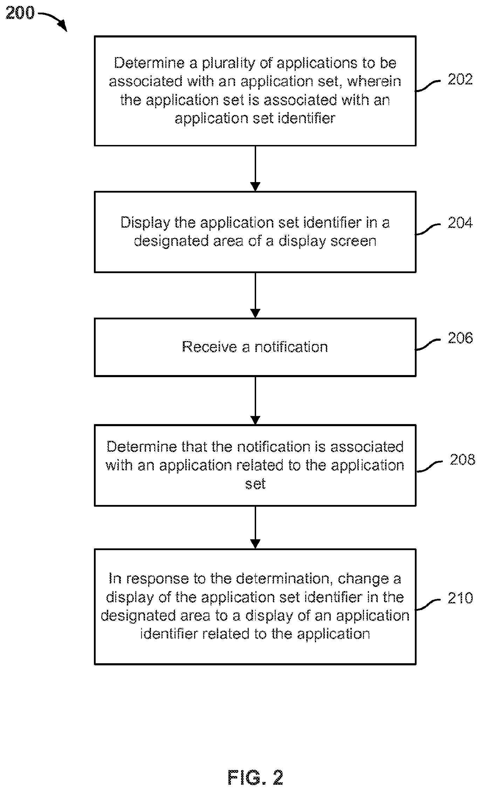

FIG. 2 is a flow diagram showing an embodiment of a process for displaying an application set identifier. In some embodiments, process 200 is implemented at device 102 of FIG. 1.

At 202, a plurality of applications are determined to be associated with an application set, wherein the application set is associated with an application set identifier. A plurality of applications is selected to be included in an application set. In some embodiments, a selected application is already installed at the device. In some embodiments, a selected application is yet to be downloaded at the device. After selection of the applications to be included in the application set, any applications that have not already been downloaded and installed at the device are downloaded and installed at the device. For example, multiple applications that share a common attribute (e.g., being associated with the same e-commerce platform) can be selected to be integrated into the application set and collectively represented by a single representation at the user interface, the application set identifier. In some embodiments, an application executing at the device is configured to integrate the selected applications into the application set and then to change the display associated with the application set identifier in response to different actions performed with respect to the application set identifier itself or to a particular application included in the application set. In some embodiments, identifiers (e.g., icons) of the applications included in the application set are not separately presented at the user interface of the mobile device in addition to the application set identifier. In some embodiments, identifiers (e.g., icons) of the applications included in the application set are also separately presented at the user interface (e.g., desktop) of the mobile device in addition to the application set identifier.

At 204, the application set identifier is displayed in a designated area of a display screen. The application set identifier is displayed in a designated area on the display screen of the device. In some embodiments, the designated area is in a corner of the display screen. In some embodiments, the designated area is a portion of a desktop of the device. In some embodiments, the designated area is a portion of a web page that is being displayed in a web browser application. For example, the application set identifier may be embedded in a webpage that is currently being browsed in the web browser application. The designated area in which the application set identifier is to be displayed may be configured by a user of the device. In some embodiments, the application set identifier is presented in a designated area of the display screen as an overlay to another application, if any other application is currently opened, or the desktop. By displaying the application set identifier as an overlay to other content that is presented in the display screen, the user's attention may be easily drawn to the application set identifier.

At 206, a notification is received. A notification associated with an application has a certain predetermined format and may comprise an alert associated with a received message associated with the application, an update message to the application, and an operation result message associated with the application. In some embodiments, a notification comprises a message that is received at an application and to be communicated to a user. In some embodiments, a notification may comprise a push notification. In some embodiments, the notification comprises information that is forwarded to the device over a network. In some embodiments, the notification is sent from another device. In some embodiments, the notification is sent from a server.

At 208, it is determined that the notification is associated with an application related to the application set. It is determined whether the received notification is associated with an application that is included in the determined application set. For example, the determination may be performed by comparing the application associated with the received notification to a list of applications that are included in the application set. If the application is found on the list, then the notification is determined to be associated with an application that is included in the application set and control is transferred to 210. Otherwise, if the notification is not associated with an application included in the application set, a visual alert may be displayed with an identifier associated with that particular application and process 200 ends.

At 210, in response to the determination, a display of the application set identifier in the designated area is changed to a display of an application identifier related to the application. The user can be alerted to the fact that a notification has been received by an application associated with the application set identifier by viewing the display of the application set identifier has changed to a display of the application identifier associated with the affected application in the application set. In some embodiments, an image (e.g., icon) is associated with the application set identifier and a different image (e.g., icon) is associated with the identifier of each application included in the application set. Then, changing the display from the application set identifier icon to the application identifier icon includes an animation that switches the application set identifier icon with the application identifier icon in the designated area of the display screen where the application set identifier icon is usually displayed. The user may learn for which application the notification was received based on the application's corresponding icon that is displayed in place of the icon of the application set identifier.

For example, if the application set identifier is displayed on the desktop of the device and no other applications are opened, the user does not need to specifically look through the application identifiers associated with each individual application that is included in the application set to determine whether a notification has been received for any of such applications. Rather, the user can determine that a notification has been received for an application included in the application set by seeing to which application identifier the display of the application set identifier has switched. As a result, the notification associated with such an application is discovered and viewed more promptly.

For example, if the icon set application identifier is embedded within a web page being viewed in a web browser application, then the user does not need to exit the web browser application to view the application identifier associated with the application of the application set that has been determined to receive a notification. Rather, the user can determine that a notification has been received for an application included in the application set by seeing to which application identifier the display of the application set identifier has switched. As a result, the notification associated with such an application is discovered and viewed more promptly.

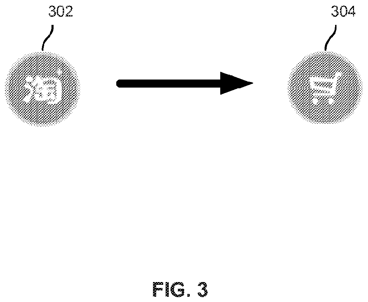

FIG. 3 shows an example of an application set identifier and an application identifier. In some embodiments, identifiers 302 and 304 may be displayed at device 102 of FIG. 1. In the example, identifier 302 is an example of an application set identifier and identifier 304 is an example of an application identifier. In the example, the application corresponding to identifier 304 is included in the application set associated with identifier 302. In the example, the application associated with identifier 304 is a shopping cart application. The shopping cart application may be included in the application set associated with identifier 302 with other related or unrelated applications. Applying process 200 of FIG. 2 to the example of FIG. 3, identifier 302 associated with an application set would be displayed in a designated area of a display screen and in the event that a notification associated with the shopping cart application associated with identifier 304 is received at the device, the display of identifier 302 associated with the application set in the designated area is changed to a display of identifier 304 associated with the shopping cart application.

The user may select the application identifier that is displayed in the designated area of the application set identifier to access the application corresponding to the application identifier. Returning to the example of FIG. 3, the user may select identifier 304 associated with the shopping cart application to access the shopping cart application and potentially to view a message associated with the received notification that prompted the display to switch from identifier 302 to identifier 304.

In some embodiments, it is determined that an application set identifier restoration event has occurred. In some embodiments, the occurrence of an application set identifier restoration event triggers the application set identifier to be displayed again. An example of an application set identifier restoration event is an elapse of a configured period of time after the application identifier is displayed in the designated area associated with the application set identifier. Once the event occurs, the display of the application identifier is replaced with a display of the application set identifier once again.

Even if a notification associated with an application in the application set is not received, a user may access a particular application included in an application set, as will be described below.

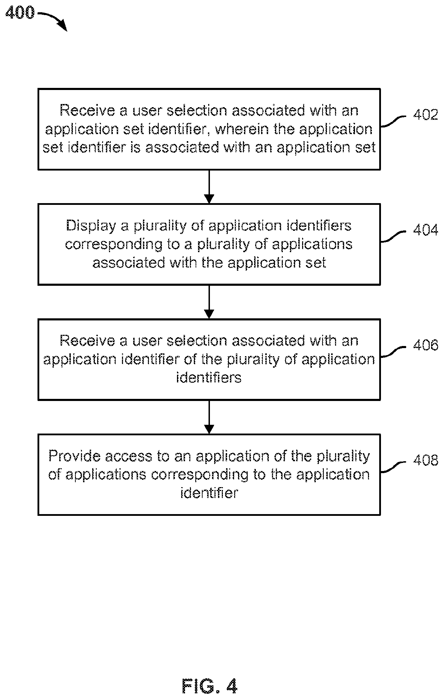

FIG. 4 is a flow diagram showing an embodiment of a process for accessing an application included in an application set. In some embodiments, process 400 is implemented at device 102 of FIG. 1.

Process 400 is an example of a process of displaying the identifier of each application that is included in an application set. By displaying the identifiers corresponding to respective applications included in the application set, a user may select the application identifier corresponding to a particular application included in the application in order to access that application (regardless if that application has recently received a notification).

At 402, a user selection associated with an application set identifier is received, wherein the application set identifier is associated with an application set. In some embodiments, a first image (e.g., icon) associated with an application set identifier is displayed in the designated area of the display screen associated with the application. For example, the first image is generic to all the applications included in the application set. A user selection to the first image associated with the application set identifier is received.

At 404, a plurality of application identifiers corresponding to a plurality of applications associated with the application set is displayed. In response to the user selection of the first image associated with the application set identifier, a second image associated with the application set identifier that includes the application identifiers corresponding to each application included in the application set is displayed. For example, the second image associated with the application set identifier includes several icons, where each icon is associated with an application included in the application set.

At 406, a user selection associated with an application identifier of the plurality of application identifiers is received. A user may select a particular application identifier to access the application corresponding to that application identifier.

At 408, access to an application of the plurality of applications corresponding to the application identifier is provided. The application of the selected application identifier is opened for the user to use.

In some embodiments, it is determined that an application set identifier restoration event has occurred. For example, if the application set identifier restoration event is an elapse of a configured period of time after the second image associated with the application set identifier that includes the application identifiers corresponding to each application included in the application set is displayed, then once the event occurs, the display of the application identifiers is replaced with a display of the application set identifier once again.

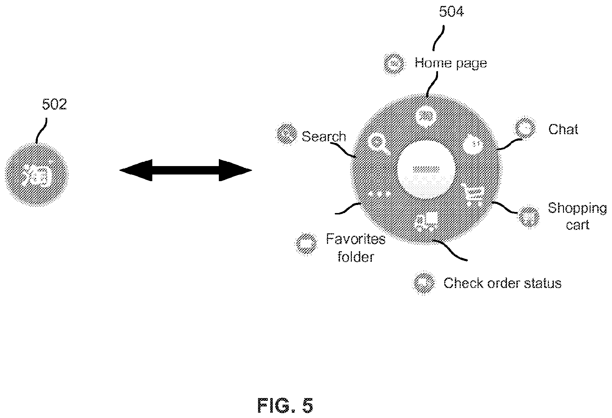

FIG. 5 includes diagrams showing two images associated with an application set identifier. Identifier 502 comprises a first image of an application set identifier that is generic to the applications included in the application set. As shown in the example, identifier 502 comprises a single icon. Identifier 504 comprises a second image of the application set identifier that includes an application identifier associated with each of the specific applications that are included in the application. The specific applications include: a home page application, a chat application, a shopping cart application, a check order status application, a favorites folder application, and a search application. In the example, the applications included in the application set are all associated with the same e-commerce platform. As described in process 400 of FIG. 4, a user selection of a first image of the application set identifier that is generic to the different applications, identifier 502, will cause the display of the application set identifier to change into the second image of the application set identifier that comprises multiple application identifiers corresponding to all the applications of the application set. A user may then select a particular application identifier of identifier 504 to access the corresponding application.

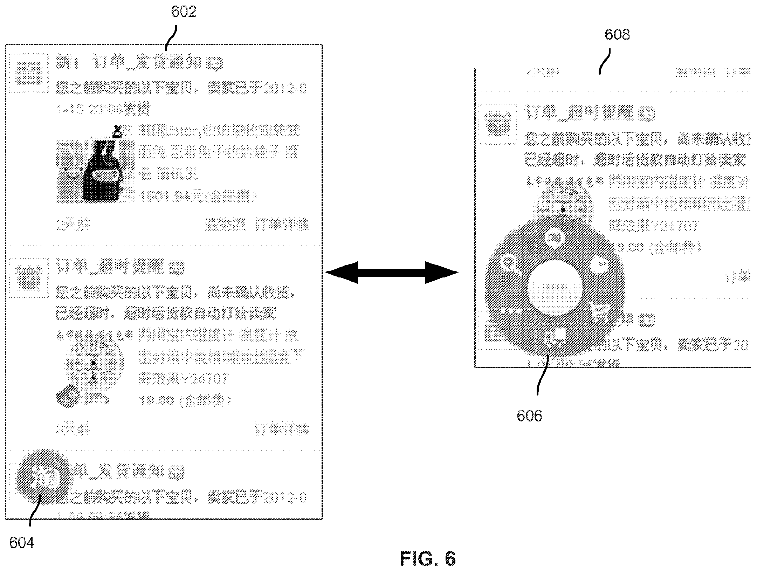

FIG. 6 includes diagrams showing two images associated with an application set identifier in a designated area of a display screen. In the example, display screen 602 shows first image 604 associated with an application set identifier in the designated area of the lower left corner of the display screen of a mobile device. As shown in the example, first image 604 associated with the application set identifier is displayed over other content (e.g., associated with another application such as a webpage being viewed in a browser application) that is currently being viewed at the display screen. For example, in the event that a user selects first image 604 associated with the application set identifier, the display of first image 604 switches to second image 606. Portion of display screen 608 shows second image 606 associated with the application set identifier being shown in the same designated area of the display screen. Whereas first image 604 appears as a single icon, second image 606 associated with the same application set identifier includes several icons, each associated with a different application included in the application set associated with the application set identifier. In some embodiments, at the occurrence of an application set identifier restoration event (e.g., an elapse of a configured period of time), the display in the designated area of the display screen switches back from second image 606 to first image 604.

In some embodiments, at least some applications included in an application set may be inter-related. Two or more applications are inter-related if an operation performed in one of the applications causes a notification to be generated for another one of the applications. For example, a user operation in a first application may be performed and it is determined that the user operation with respect to the first application is relevant to a second application included in the application set. Therefore, a notification may be caused (e.g., by the device or the application implementing the application set identifier) to be sent from the first application to the second application via a designated interface (e.g., for communications between inter-related applications). Upon determining that the second application has received a notification, a display associated with the application set identifier may be switched to a display of the second application, which received the notification from the first application.

In some embodiments, an operation in the first application that causes a notification to be sent to a second application comprises a second application entry point that is embedded in the first application. Thus, when it is determined that a user operation performed in the first application has entered the second application via the second application entry point that is embedded in the first application, it triggers the first application to send a notification to the second application control via a designated interface.

By including various inter-related applications in an application set, the application set identifier may be used to instantly display an application identifier associated with an application that has recently received a notification that was generated by another application in the application set. The application set identifier can efficiently allow a user to navigate through the inter-related applications that are included in the same application set, especially to an application that has most recently received a notification.

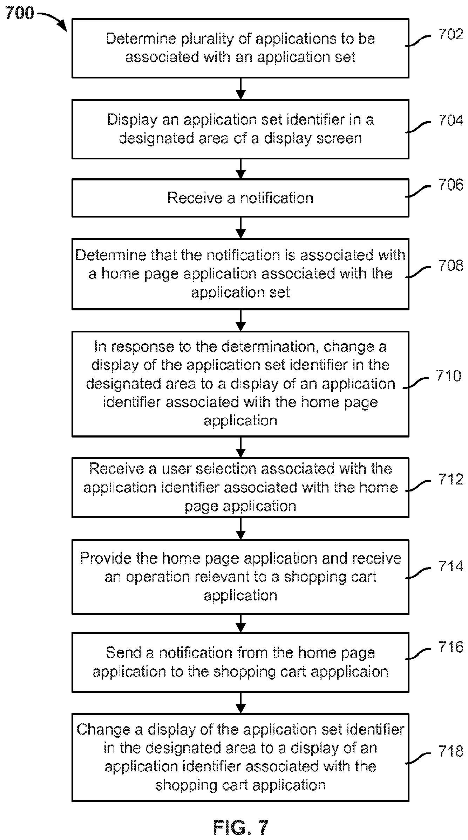

FIG. 7 is a flow diagram showing an example of a process for displaying an application set identifier. In some embodiments, process 700 is implemented at device 102 of FIG. 1.

Process 700 shows an example of displaying an application set identifier for a set of applications, of which at least some are inter-related.

At 702, a plurality of applications is determined to be associated with an application set, wherein the application set is associated with an application set identifier. In the example, multiple applications related to an e-commerce platform are included in an application. In the example, the applications in the set include the following:

Home page application. In the example, the user may access the home page application to browse through listings of items that are available for purchase at the e-commerce platform.

Shopping cart application. In the example, the user may access the shopping cart application to browse through items, if any, that have been added to the shopping cart. For example, the user may also perform check out with respect to any of the items.

Check order status application. In the example, the user may access the check order status application to check the order fulfillment status of any orders that the user has previously made.

Favorites folder application. In the example, the user may access the favorites folder application to review the listings of items for which the user has previously indicated to save to the favorites folder.

Search application. In the example, the user may access the search application to search through listings of items at the e-commerce platform.

Chat application. In the example, the user may access the chat application to send a message to another user associated with the e-commerce platform.

As will be described below, when a user performs an operation in the home page application, the home page application can be triggered to send a notification to a related application (e.g., the favorites folder application, the shopping cart application, the check order status information application, the chat application, and the search application) that is affected by the operation. Thus, the user can be promptly notified of various notifications to these inter-related applications through the designated area associated with the application set identifier. The application set identifier is an integrated identifier that may serve to guide a user through various stages of a shopping process by providing accesses and timely notifications regarding the relevant applications that are included in an application set.

At 704, the application set identifier is displayed in a designated area of a display screen.

At 706, a notification is received.

At 708, it is determined that the notification is associated with a home page application associated with the application set. In the example, the notification is associated with the home page application of the set of applications. At 710, in response to the determination, a display of the application set identifier in the designated area is changed to a display of an application identifier associated with the home page application.

At 712, a user selection associated with the application identifier associated with the home page application is received. For example, the user selects the application identifier associated with the home page application to access the home page application.

At 714, the home page application is provided and an operation relevant to a shopping cart application is received. In the example, each item listing displayed in the opened home page application is displayed with a control that once selected by the user, causes an operation result to occur with respect to the related shopping cart application. This is because each control comprises an entry point to the shopping cart application. For example, such controls include "Add item to shopping cart" or "Remove item from shopping cart." Other operations available to be executed in the home page application may also include controls relating to the check order status application such as generating order status information or deleting order status information. Moreover, operations available to be executed in the home page application may also include operations relating to the favorites folder application and to the search application.

In example, once the home page application is provided to the user, the user selects to add an item to the shopping cart.

In the example, an application set identifier restoration event has occurred, so the display of the home page application identifier has already been changed back to the application set identifier.

At 716, a notification is sent from the home page application to the shopping cart application. In this example, because of the user's selection to add an item displayed in the home page application to the shopping cart, the home page application is caused to send a notification message to a server, which in turn sends a notification to the shopping cart application of the device.

At 718, a display of the application set identifier in the designated area is changed to a display of an application identifier associated with the shopping cart application. Upon determining that the shopping cart application has received the notification, the display of the application set identifier is changed to the display of the shopping cart application identifier in the designated area, which alerts the user that an item has been added to the virtual shopping cart.

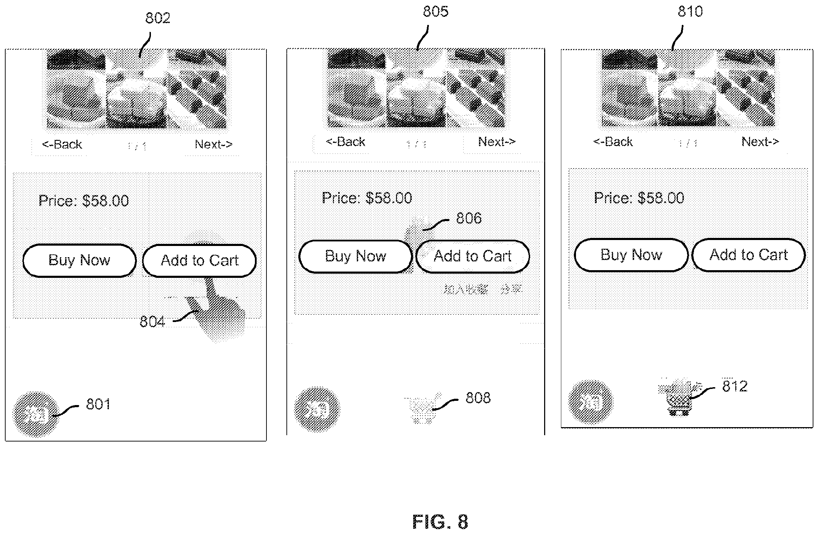

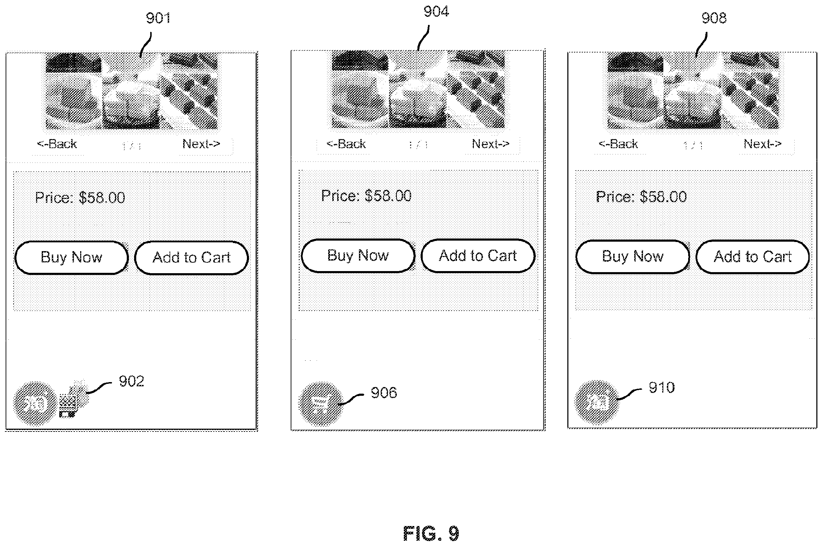

In one example, switching the display of the application set identifier to the display of the shopping cart application identifier in the designated area associated with the application set identifier is implemented as an animation (e.g., a Flash-based animation). FIGS. 8 and 9 show a series of display screens of a device subsequent to a user operation within a home page application associated with an application set identifier. Application set identifier 801 is displayed in its designated area on the display screen. In display screen 802, a user who is viewing an item listing selects the "Add to Cart" control, which causes the item to be added to the virtual shopping cart. In display screen 805, in response to the user selection of the "Add to Cart" control, an animation begins where shopping bag icon 806 is released from the "Add to Cart" control and shopping cart icon 808 appears at the bottom of the display screen. In response to selection 804 of the "Add to Cart" control, which comprises an operation relevant to the shopping cart application, the home page application is caused to send a notification to the shopping cart application. Next, display screen 810 shows that the shopping bag icon had landed in the shopping cart icon to form filled shopping cart icon 812, which is moving towards the application set identifier. Then, display screen 901 of FIG. 9 shows that filled shopping cart icon 902 has moved even closer to the application set identifier. Subsequently, display screen 904 shows that in the display screen, the application set identifier is now replaced by identifier 906, which is associated with the shopping cart application, to which a notification was sent from the home page application. The switch from displaying the application set identifier to the shopping cart application identifier may indicate to the user as a confirmation that the added item has in fact been added to the virtual shopping cart. While identifier 906 associated with the shopping cart application is displayed, the user may select it to access the shopping cart application (e.g., to view the item(s) in the shopping cart). Once an application set identifier restoration event (e.g., an elapse of a configured period of time) has occurred, application set identifier 910 is restored in the designed area, as shown in display screen 908.

In a second example (not shown), if the user completes a payment operation in the home page application, which generates an order status information, then the home page application can be triggered to send a notification to the check order status application via the designated interface. After it is determined that the check order status application has received the notification, a display of the application set identifier in the designated area is changed to a display of an application identifier associated with the check order status information application. Therefore, the user of the device may be alerted to the notification that is received at the check order status information application.

In a third example, if the user enters the favorites folder through the favorites folder entry point included in the home page application and performs a "Delete a favorite page" or "Add a favorite page" operation, then the home page application can be triggered to send a notification to the favorites folder application via the designated interface. After it is determined that the favorites folder application has received the notification, a display of the application set identifier in the designated area is changed to a display of an application identifier associated with the favorites folder application. Therefore, the user of the device may be alerted to the notification that is received at the favorites folder application.

In a fourth example, if the user inputs a search query at the home page application through the search engine entry point included in the home page application, then the home page application can be triggered to send a notification to the search application via the designated interface. After it is determined that the search application has received the notification, a display of the application set identifier in the designated area is changed to a display of an application identifier associated with the search application. Therefore, the user of the device may be alerted to the notification that is received at the search application.

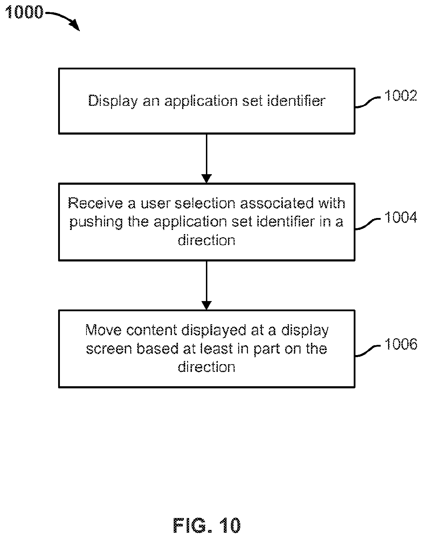

FIG. 10 is a flow diagram showing an embodiment of a process of moving content displayed at a display screen based on a user selection received with respect to the application set identifier. In some embodiments, process 1000 is implemented at device 102 of FIG. 1.

In some embodiments, in addition to integrating notifications of various applications included in an application set, the application set identifier may be used by a user to navigate through content displayed at the display screen. For example, if a web page were displayed (e.g., within a web browser application) in the display screen of a device, then a user may interact with the displayed application set identifier to scroll through the display of the web page.

At 1002, an application set identifier is displayed. For example, the application set identifier associated with an application set is displayed in a designated area of the display screen.

At 1004, a user selection associated with pushing the application set identifier in a direction is received. The device (or an application executing on the device) may be configured such that if the user pushes the displayed application set identifier in a particular direction, the content on the display screen would scroll in the corresponding direction. For example, a user may select the application set identifier and move it in a particular direction. For example, the user may move the application set identifier up, down, left, or right.

At 1006, content displayed in a display screen is moved based at least in part on the direction. In response to the user selection to move the application set identifier, the content displayed in the display screen of the device is scrolled in a corresponding direction. For example, if a web page is being displayed in an opened web browser application, and the application set identifier is selected by a user and moved upwards, then the web page is correspondingly scrolled upwards.

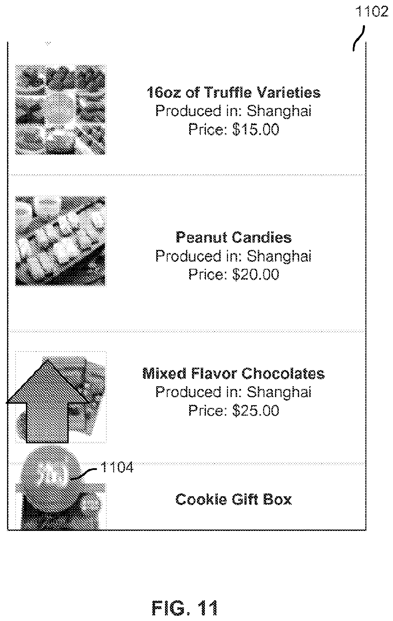

FIG. 11 is a diagram showing an example of a user selection associated with pushing the application set identifier in an up direction. As shown in the example, application set identifier 1104 is being selected by a user and also pushed upwards along the displayed content of display screen 1102. As a result of the user selection to move application set identifier 1104 upwards, the displayed content also scrolls upwards.

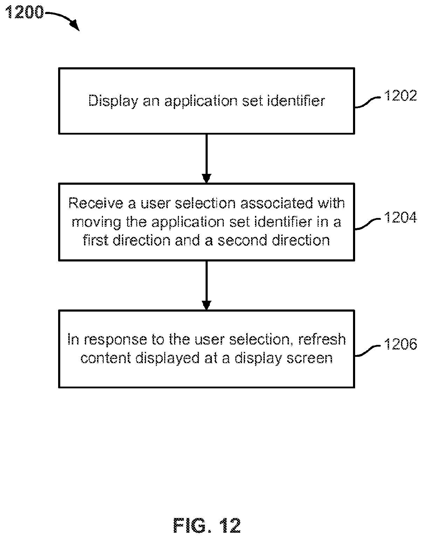

FIG. 12 is a flow diagram showing an embodiment of a process of refreshing content based on a user selection received with respect to the application set identifier. In some embodiments, process 1200 is implemented at device 102 of FIG. 1.

In some embodiments, in addition to integrating notifications of various applications included in an application set, the application set identifier may be used by a user to refresh the content displayed at the display screen. For example, the displayed application set identifier may be interacted with in a manner that is configured to cause a web page (e.g., that is being displayed in a web browser) to be refreshed.

At 1202, an application set identifier is displayed. For example, the application set identifier may be displayed over the desktop application or over another application that is currently opened at the device.

At 1204, a user selection associated with moving the application set identifier in a first direction and a second direction is received. The device (or an application executing on the device) may be configured such that if the user moves the displayed application set identifier in a first direction and then a second direction, the content on the display screen would refresh. For example, if a web page were being displayed, then the web page would refresh.

At 1206, in response to the user selection, content displayed in a display screen is refreshed. For example, the device (or an application executing on the device) may be configured such that if the displayed application set identifier were moved to the left and then right (or the right and then left), then the content would refresh (e.g., and any updates to the content since it was previously loaded would be reflected in the refreshed content).

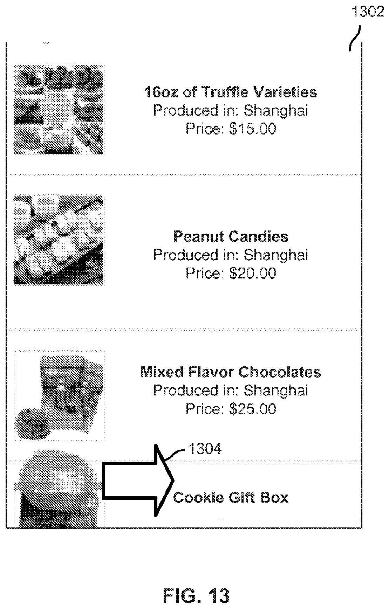

FIG. 13 is a diagram showing an example of a user selection associated with moving the application set identifier to cause displayed content to refresh. As shown in the example, application set identifier 1304 is being selected by a user and moved to the right along the displayed content of display screen 1302 and then left (not shown). As a result of the user selection to move application set identifier 1304 from the left to right (or from the right to left), the displayed content is refreshed.

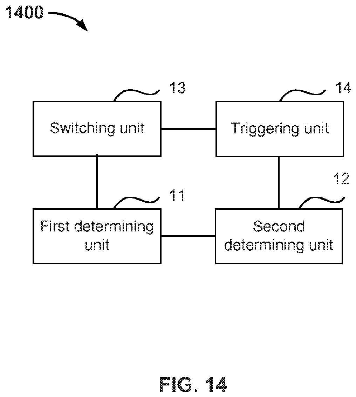

FIG. 14 is a diagram showing an embodiment of a system for displaying an application set identifier. System 1400 includes first determining unit 11, second determining unit 12, switching unit 13, and triggering unit 14.

The units can be implemented as software components executing on one or more processors, as hardware such as programmable logic devices and/or Application Specific Integrated Circuits designed to elements can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present invention. The units may be implemented on a single device or distributed across multiple devices.

First determining unit 11 is configured to determine a plurality of applications to be associated with an application set identifier. In some embodiments, the application set includes at least two applications. Each application is associated with a different application identifier. Second determining unit 12 is configured to receive a notification and upon determining that the received message is associated with an application that is included in the application set, to change the display of the application set identifier to a display of an application identifier associated with that application in the designated area of a display screen associated with the application set identifier.

Second determining unit 12 is configured to dynamically display the application identifier of the application for which the notification was received.

First determining unit 11 is configured to determine, in the event that the set application identifier has been embedded in a designated location in a page, where the designated location in the page is so as to be able to display the application set identifier at that location.

First determining unit 11 is configured to determine, in the event that the application set identifier is configured to be displayed at the desktop of the device, when the application set identifier is to be displayed at the desktop (e.g., when the desktop is open at the display screen of the device).

In some embodiments, system 1400 includes switching unit 13:

After first determining unit 11 receives a first user selection to a displayed first image associated with an application set identifier and causes a second image associated with the application set identifier comprising a plurality of application identifiers to be displayed, switching unit 13 is configured to determine whether a second user selection has been received for an application identifier of the plurality of application identifiers. In the event that a user selection has been received for the application identifier, switching unit 13 is configured to provide access to the application associated with the selected application identifier.

Second determining unit 12 is configured to determine whether an application set identifier restoration event has occurred since the display of the application set identifier was switched to the application identifier. In the event that the application set identifier restoration event has occurred, the application set identifier is again displayed in the designated area of the display screen.

In some embodiments, system 1400 includes triggering unit 14:

Triggering unit 14 is configured to determine whether an operation associated with an opened first application included in the application set is related to a second application included in the application set and therefore causes a notification to be sent to the second application via a designated interface. For example, such an operation made by a user with respect to the first application is associated with an embedded entry point of the second application in the first application.

A person skilled in the art should understand that the embodiments of the present application can be provided as methods, systems or computer software products. Therefore, the present application can take the form of embodiments consisting entirely of hardware, embodiments consisting entirely of software, and embodiments which combine software and hardware. In addition, the present application can take the form of computer program products implemented on one or more computer-operable storage media (including but not limited to magnetic disk storage devices, CD-ROMs, and optical storage devices) containing computer operable program codes.

The present application is described with reference to flow charts and/or block diagrams based on methods, equipment (systems) and computer program products. It should be understood that each process and/or block in the flow charts and/or block diagrams, and combinations of processes and/or blocks in the flow charts and/or block diagrams, can be achieved through computer program commands. One can provide these computer commands to a general-purpose computer, a specialized computer, an embedded processor or the processor of other programmable data processing equipment so as to give rise to a machine, with the result that the commands executed through the computer or processor of other programmable data processing equipment give rise to a device that is used to realize the functions designated by one or more processes in a flow chart and/or one or more blocks in a block diagram.

These computer program commands can also be stored on specially-operating computer-readable storage devices that can guide computers or other programmable data equipment, with the result that the commands stored on these computer-readable devices give rise to products that include command devices. These command devices realize the functions designated in one or more processes in a flow chart and/or one or more blocks in a block diagram.

These computer program commands can also be loaded onto a computer or other programmable data processing equipment, with the result that a series of operating steps are executed on a computer or other programmable equipment so as to give rise to computer processing. In this way, the commands executed on a computer or other programmable equipment provide steps for realizing the functions designated by one or more processes in a flow chart and/or one or more blocks in a block diagram.

Although preferred embodiments of the present application have already been described, a person skilled in the art can make other modifications or revisions to these embodiments once he grasps the basic creative concept. Therefore, the attached claims are to be interpreted as including the preferred embodiments as well as all modifications and revisions falling within the scope of the present application.

Obviously, a person skilled in the art can modify and vary the present application without departing from the scope of the present invention. Thus, if these modifications to and variations of the present application lie within the scope of its claims and equivalent technologies, then the present application intends to cover these modifications and variations as well.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A system, comprising:
one or more processors configured to:
display (204) an application set identifier (302) in a designated area of a display screen (602), wherein the application set identifier (302) is associated with an application set (304), wherein the application set (304) comprises a first application and a second application, wherein the first application is open and is configured to display content at the display screen (602), wherein displaying the application set identifier (302) comprises overlaying the application set identifier (302) over the content displayed by the first application and wherein the first application is related to the second application;
receive (206) a notification, wherein the notification is generated based at least in part on an operation performed at the first application;
determine (208) that the notification is associated with the second application; and
in response to the determination, change (210) a display of the application set identifier in the designated area to a display of an application identifier associated with the second application; and
one or more memories coupled to the one or more processors and configured to provide the one or more processors with instructions.

2. The system of Claim 1, wherein the one or more processors are further configured to determine a plurality of applications to be associated with the application set (304).

3. The system of Claim 2, wherein the plurality of applications is user selected to be included in the application set (304).

4. The system of Claim 1, wherein the one or more processors are further configured to:
receive (1004) a user selection associated with causing the application set identifier (302) to be moved in a direction along the display screen; and
move (1006) content displayed at the display screen based at least in part on the direction.

5. The system of Claim 1, wherein the one or more processors are further configured to:
receive (1204) a user selection associated with causing the application set identifier (302) to be moved in a first direction and a second direction along the display screen; and
in response to the user selection associated with causing the application set identifier (302) to be moved in the first direction and the second direction along the display screen, refresh (1206) content displayed at the display screen.

6. A method, comprising:
displaying an application set identifier (302) in a designated area of a display screen, wherein the application set identifier (302) is associated with an application set (304), wherein the application set (304) comprises a first application and a second application, wherein the first application is open and is configured to display content at the display screen, wherein displaying the application set identifier comprises overlaying the application set identifier (302) over the content displayed by the first application and
wherein the first application is related to the second application;
receiving a notification, wherein the notification is generated based at least in part on an operation performed at the first application;
determining that the notification is associated with the second application; and
in response to the determination, changing a display of the application set identifier (302) in the designated area to a display of an application identifier associated with the second application.

7. The method of Claim 6, further comprising determining the plurality of applications to be associated with the application set.

8. The system of Claim 1 or the method of Claim 6, wherein at least some applications of the application set are associated with an electronic commerce platform.

9. The system of Claim 1 wherein the one or more processors are further configured for, or the method of Claim 6 further comprising:
receiving (402) a user selection associated with the application set identifier;
displaying (404) a plurality of application identifiers corresponding to a plurality of applications of the application set in the designated area of the display screen;
receiving (406) a user selection associated with an application identifier of the plurality of application identifiers; and
providing (408) access to an application of the plurality of applications corresponding to the selected application identifier.

10. The system of Claim 1 wherein the one or more processors are further configured for, or the method of Claim 6 further comprising:
determining that an application set identifier restoration event has occurred; and
in response to the determination of the application set identifier restoration event, changing the display of the application identifier in the designated area back to the display of the application set identifier.

11. The system of Claim 1 or the method of Claim 6, wherein the application set identifier (302) is associated with a first image that is generic to a plurality of applications included in the application set and a second image that comprises a plurality of images corresponding to respective ones of the plurality of applications of the application set.

12. The method of Claim 6, further comprising:
receiving (1004) a user selection associated with causing the application set identifier to be moved in a direction along the display screen; and
moving (1006) content displayed at the display screen based at least in part on the direction.

13. The method of Claim 6, further comprising:
receiving (1204) a user selection associated with causing the application set identifier (302) to be moved in a first direction and a second direction along the display screen; and
in response to the user selection associated with causing the application set identifier (302) to be moved in the first direction and the second direction along the display screen, refreshing (1206) content displayed at the display screen.

14. A computer program product, wherein the computer program product is embodied in a non-transitory computer readable storage medium and comprising computer instructions for:
displaying (204) an application set identifier (302) in a designated area of a display screen, wherein the application set identifier (302) is associated with an application set, wherein the application set comprises a first application and a second application, wherein the first application is open and is configured to display content at the display screen, wherein displaying the application set identifier (302) comprises overlaying the application set identifier over the content displayed by the first application and wherein the first application is related to the second application;
receiving (206) a notification, wherein the notification is generated based at least in part on an operation performed at the first application;
determining that the notification is associated with the second application; and
in response to the determination, changing (210) a display of the application set identifier in the designated area to a display of an application identifier associated with the second application.

## Patentansprüche

1. System, Folgendes umfassend:
einen oder mehrere Prozessoren, die konfiguriert sind, um:
eine Anwendungssatzkennung (302) in einem festgelegten Bereich eines Anzeigeschirms (602) anzuzeigen (204), wobei die Anwendungssatzkennung (302) einem Anwendungssatz (304) zugeordnet ist, wobei der Anwendungssatz (304) eine erste Anwendung und eine zweite Anwendung umfasst, wobei die erste Anwendung geöffnet ist und konfiguriert ist, Inhalt auf dem Anzeigeschirm (602) anzuzeigen, wobei Anzeigen der Anwendungssatzkennung (302) Überlagern der Anwendungssatzkennung (302) über dem Inhalt umfasst, der durch die erste Anwendung angezeigt wird, und wobei die erste Anwendung auf die zweite Anwendung bezogen ist;
eine Benachrichtigung zu erhalten (206), wobei die Benachrichtigung mindestens teilweise auf der Grundlage einer Operation erzeugt wird, die in der ersten Anwendung durchgeführt wird;
zu bestimmen (208), dass die Benachrichtigung der zweiten Anwendung zugeordnet ist;
und
als Reaktion auf die Bestimmung eine Anzeige der Anwendungssatzkennung in dem festgelegten Bereich in eine Anzeige einer Anwendungskennung zu verändern (210), die der zweiten Anwendung zugeordnet ist; und
einen oder mehrere Speicher, die an den einen oder die mehreren Prozessoren angeschlossen sind und konfiguriert sind, dem einen oder den mehreren Prozessoren Befehle bereitzustellen.

2. System nach Anspruch 1, wobei der eine oder die mehreren Prozessoren weiterhin konfiguriert sind, mehrere Anwendungen zu bestimmen, die dem Anwendungssatz (304) zugeordnet werden sollen.

3. System nach Anspruch 2, wobei die mehreren Anwendungen durch einen Benutzer ausgewählt sind, um in den Anwendungssatz (304) aufgenommen zu werden.

4. System nach Anspruch 1, wobei der eine oder die mehreren Prozessoren weiterhin konfiguriert sind, um:
eine Benutzerauswahl zu erhalten (1004), die dem Bewirken zugeordnet ist, dass die Anwendungssatzkennung (302) in eine Richtung entlang des Anzeigeschirms bewegt wird; und
Inhalt, der auf dem Anzeigeschirm angezeigt wird, mindestens teilweise auf der Grundlage der Richtung zu bewegen (1006).

5. System nach Anspruch 1, wobei der eine oder die mehreren Prozessoren weiterhin konfiguriert sind, um:
eine Benutzerauswahl zu erhalten (1204), die dem Bewirken zugeordnet ist, dass die Anwendungssatzkennung (302) in eine erste Richtung und in eine zweite Richtung entlang des Anzeigeschirms bewegt wird; und
als Reaktion auf die Benutzerauswahl, die dem Bewirken zugeordnet ist, dass die Anwendungssatzkennung (302) in die erste Richtung und in die zweite Richtung entlang des Anzeigeschirms bewegt wird, Inhalt aufzufrischen (1206), der auf dem Anzeigeschirm angezeigt wird.

6. Verfahren, Folgendes umfassend:
Anzeigen einer Anwendungssatzkennung (302) in einem festgelegten Bereich eines Anzeigeschirms, wobei die Anwendungssatzkennung (302) einem Anwendungssatz (304) zugeordnet ist, wobei der Anwendungssatz (304) eine erste Anwendung und eine zweite Anwendung umfasst, wobei die erste Anwendung geöffnet ist und konfiguriert ist, Inhalt auf dem Anzeigeschirm anzuzeigen, wobei Anzeigen der Anwendungssatzkennung Überlagern der Anwendungssatzkennung (302) über dem Inhalt umfasst, der durch die erste Anwendung angezeigt wird, und wobei die erste Anwendung auf die zweite Anwendung bezogen ist;
Erhalten einer Benachrichtigung, wobei die Benachrichtigung mindestens teilweise auf der Grundlage einer Operation erzeugt wird, die in der ersten Anwendung durchgeführt wird;
Bestimmen, dass die Benachrichtigung der zweiten Anwendung zugeordnet ist; und
als Reaktion auf die Bestimmung Verändern einer Anzeige der Anwendungssatzkennung (302) in dem festgelegten Bereich in eine Anzeige einer Anwendungskennung, die der zweiten Anwendung zugeordnet ist.

7. Verfahren nach Anspruch 6, weiterhin umfassend Bestimmen der mehreren Anwendungen, die dem Anwendungssatz zugeordnet werden sollen.

8. System nach Anspruch 1 oder Verfahren nach Anspruch 6, wobei mindestens manche Anwendungen des Anwendungssatzes einer elektronischen Handelsplattform zugeordnet sind.

9. System nach Anspruch 1, wobei der eine oder die mehreren Prozessoren weiterhin konfiguriert sind für, oder das Verfahren nach Anspruch 6 weiterhin Folgendes umfasst:
Erhalten (402) einer Benutzerauswahl, die der Anwendungssatzkennung zugeordnet ist;
Anzeigen (404) mehrerer Anwendungskennungen entsprechend mehrerer Anwendungen des Anwendungssatzes in dem festgelegten Bereich des Anzeigeschirms;
Erhalten (406) einer Benutzerauswahl, die einer Anwendungskennung der mehreren Anwendungskennungen zugeordnet ist; und
Bereitstellen (408) von Zugriff auf eine Anwendung der mehreren Anwendungen entsprechend der ausgewählten Anwendungskennung.

10. System nach Anspruch 1, wobei der eine oder die mehreren Prozessoren weiterhin konfiguriert sind für, oder das Verfahren nach Anspruch 6 weiterhin Folgendes umfasst:
Bestimmen, dass ein Anwendungssatzkennungs-Wiederherstellungsereignis aufgetreten ist; und
als Reaktion auf die Bestimmung des Anwendungssatzkennungs-Wiederherstellungsereignisses Verändern der Anzeige der Anwendungskennung in dem festgelegten Bereich zurück zu der Anzeige der Anwendungssatzkennung.

11. System nach Anspruch 1 oder Verfahren nach Anspruch 6, wobei die Anwendungssatzkennung (302) einem ersten Bild, das für mehrere Anwendungen, die in dem Anwendungssatz enthalten sind, generisch ist, und einem zweiten Bild zugeordnet ist, das mehrere Bilder umfasst, die jeweiligen der mehreren Anwendungen des Anwendungssatzes entsprechen.

12. Verfahren nach Anspruch 6, weiterhin Folgendes umfassend:
Erhalten (1004) einer Benutzerauswahl, die dem Bewirken zugeordnet ist, dass die Anwendungssatzkennung in eine Richtung entlang des Anzeigeschirms bewegt wird; und
Bewegen (1006) von Inhalt, der auf dem Anzeigeschirm angezeigt wird, mindestens teilweise auf der Grundlage der Richtung.

13. Verfahren nach Anspruch 6, weiterhin Folgendes umfassend:
Erhalten (1204) einer Benutzerauswahl, die dem Bewirken zugeordnet ist, dass die Anwendungssatzkennung (302) in eine erste Richtung und in eine zweite Richtung entlang des Anzeigeschirms bewegt wird; und
als Reaktion auf die Benutzerauswahl, die dem Bewirken zugeordnet ist, dass die Anwendungssatzkennung (302) in die erste Richtung und in die zweite Richtung entlang des Anzeigeschirms bewegt wird, Auffrischen (1206) von Inhalt, der auf dem Anzeigeschirm angezeigt wird.

14. Computerprogrammprodukt, wobei das Computerprogrammprodukt in einem nichtflüchtigen computerlesbaren Speichermedium verkörpert ist und Computerbefehle umfasst zum:
Anzeigen (204) einer Anwendungssatzkennung (302) in einem festgelegten Bereich eines Anzeigeschirms, wobei die Anwendungssatzkennung (302) einem Anwendungssatz zugeordnet ist, wobei der Anwendungssatz eine erste Anwendung und eine zweite Anwendung umfasst, wobei die erste Anwendung geöffnet ist und konfiguriert ist, Inhalt auf dem Anzeigeschirm anzuzeigen, wobei Anzeigen der Anwendungssatzkennung (302) Überlagern der Anwendungssatzkennung über dem Inhalt umfasst, der durch die erste Anwendung angezeigt wird, und wobei die erste Anwendung auf die zweite Anwendung bezogen ist;
Erhalten (206) einer Benachrichtigung, wobei die Benachrichtigung mindestens teilweise auf der Grundlage einer Operation erzeugt wird, die in der ersten Anwendung durchgeführt wird;
Bestimmen, dass die Benachrichtigung der zweiten Anwendung zugeordnet ist; und
als Reaktion auf die Bestimmung, Verändern (210) einer Anzeige der Anwendungssatzkennung in dem festgelegten Bereich in eine Anzeige einer Anwendungskennung, die der zweiten Anwendung zugeordnet ist.

## Revendications

1. Un système, comprenant :
un ou plusieurs processeurs configurés de façon à :
afficher (204) un identifiant d'ensemble d'applications (302) dans une zone désignée d'un écran d'affichage (602), où l'identifiant d'ensemble d'applications (302) est associé à un ensemble d'applications (304), où l'ensemble d'applications (304) comprend une première application et une deuxième application, où la première application est ouverte et est configurée de façon à afficher un contenu sur l'écran d'affichage (602), où l'affichage de l'identifiant d'ensemble d'applications (302) comprend la superposition de l'identifiant d'ensemble d'applications (302) sur le contenu affiché par la première application et où la première application est liée à la deuxième application,
recevoir (206) une notification, où la notification est générée en fonction au moins en partie d'une opération exécutée au niveau de la première application,
déterminer (208) que la notification est associée à la deuxième application, et
en réponse à la détermination, modifier (210) un affichage de l'identifiant d'ensemble d'applications dans la zone désignée vers un affichage d'un identifiant d'application associé à la deuxième application, et
une ou plusieurs mémoires couplées aux un ou plusieurs processeurs et configurées de façon à fournir des instructions aux un ou plusieurs processeurs.

2. Le système selon la Revendication 1, où les un ou plusieurs processeurs sont configurés en outre de façon à déterminer une pluralité d'applications à associer à l'ensemble d'applications (304).

3. Le système selon la Revendication 2, où la pluralité d'applications est sélectionnée par un utilisateur de façon à être incluse dans l'ensemble d'applications (304).

4. Le système selon la Revendication 1, où les un ou plusieurs processeurs sont configurés en outre de façon à :
recevoir (1004) une sélection d'utilisateur associée au déplacement de l'identifiant d'ensemble d'applications (302) dans une direction le long de l'écran d'affichage, et
déplacer (1006) un contenu affiché sur l'écran d'affichage en fonction au moins en partie de la direction.

5. Le système selon la Revendication 1, où les un ou plusieurs processeurs sont configurés en outre de façon à :
recevoir (1204) une sélection d'utilisateur associée au déplacement de l'identifiant d'ensemble d'applications (302) dans une première direction et une deuxième direction le long de l'écran d'affichage, et
en réponse à la sélection d'utilisateur associée au déplacement de l'identifiant d'ensemble d'applications (302) dans la première direction et la deuxième direction le long de l'écran d'affichage, rafraîchir (1206) un contenu affiché sur l'écran d'affichage.

6. Un procédé, comprenant :
l'affichage d'un identifiant d'ensemble d'applications (302) dans une zone désignée d'un écran d'affichage, où l'identifiant d'ensemble d'applications (302) est associé à un ensemble d'applications (304), où l'ensemble d'applications (304) comprend une première application et une deuxième application, où la première application est ouverte et est configurée de façon à afficher un contenu sur l'écran d'affichage, où l'affichage de l'identifiant d'ensemble d'applications comprend la superposition de l'identifiant d'ensemble d'applications (302) sur le contenu affiché par la première application et où la première application est liée à la deuxième application,
la réception d'une notification, où la notification est générée en fonction au moins en partie d'une opération exécutée au niveau de la première application,
la détermination que la notification est associée à la deuxième application, et
en réponse à la détermination, la modification d'un affichage de l'identifiant d'ensemble d'applications (302) dans la zone désignée vers un affichage d'un identifiant d'application associé à la deuxième application.

7. Le procédé selon la Revendication 6, comprenant en outre la détermination de la pluralité d'applications à associer à l'ensemble d'applications.

8. Le système selon la Revendication 1 ou le procédé selon la Revendication 6, où au moins certaines applications de l'ensemble d'applications sont associées à une plateforme de commerce électronique.

9. Le système selon la Revendication 1 où les un ou plusieurs processeurs sont configurés en outre pour, ou le procédé selon la Revendication 6 comprenant en outre :
la réception (402) d'une sélection d'utilisateur associée à l'identifiant d'ensemble d'applications,
l'affichage (404) d'une pluralité d'identifiants d'application correspondant à une pluralité d'applications de l'ensemble d'applications dans la zone désignée de l'écran d'affichage,
la réception (406) d'une sélection d'utilisateur associée à un identifiant d'application de la pluralité d'identifiants d'application, et
la fourniture (408) d'un accès à une application de la pluralité d'applications correspondant à l'identifiant d'application sélectionné.

10. Le système selon la Revendication 1 où les un ou plusieurs processeurs sont configurés en outre pour, ou le procédé selon la Revendication 6 comprenant en outre :
la détermination qu'un événement de restauration d'identifiant d'ensemble d'applications s'est produit, et
en réponse à la détermination de l'événement de restauration d'identifiant d'ensemble d'applications, la modification de l'affichage de l'identifiant d'application dans la zone désignée en retour vers l'affichage de l'identifiant d'ensemble d'applications.

11. Le système selon la Revendication 1 ou le procédé selon la Revendication 6, où l'identifiant d'ensemble d'applications (302) est associé à une première image qui est générique à une pluralité d'applications incluses dans l'ensemble d'applications et une deuxième image qui contient une pluralité d'images correspondant à des applications respectives de la pluralité d'applications de l'ensemble d'applications.

12. Le procédé selon la Revendication 6, comprenant en outre :
la réception (1004) d'une sélection d'utilisateur associée au déplacement de l'identifiant d'ensemble d'applications dans une direction le long de l'écran d'affichage, et
le déplacement (1006) d'un contenu affiché sur l'écran d'affichage en fonction au moins en partie de la direction.

13. Le procédé selon la Revendication 6, comprenant en outre :
la réception (1204) d'une sélection d'utilisateur associée au déplacement de l'identifiant d'ensemble d'applications (302) dans une première direction et une deuxième direction le long de l'écran d'affichage, et
en réponse à la sélection d'utilisateur associée au déplacement de l'identifiant d'ensemble d'applications (302) dans la première direction et la deuxième direction le long de l'écran d'affichage, le rafraîchissement (1206) d'un contenu affiché sur l'écran d'affichage.

14. Un produit de programme informatique, où le produit de programme informatique est incorporé dans un support à mémoire lisible par ordinateur non transitoire et comprenant des instructions informatiques destinées à :
l'affichage (204) d'un identifiant d'ensemble d'applications (302) dans une zone désignée d'un écran d'affichage, où l'identifiant d'ensemble d'applications (302) est associé à un ensemble d'applications, où l'ensemble d'applications comprend une première application et une deuxième application, où la première application est ouverte et est configurée de façon à afficher un contenu sur l'écran d'affichage, où l'affichage de l'identifiant d'ensemble d'applications (302) comprend la superposition de l'identifiant d'ensemble d'applications sur le contenu affiché par la première application et où la première application est liée à la deuxième application,
la réception (206) d'une notification, où la notification est générée en fonction au moins en partie d'une opération exécutée au niveau de la première application,
la détermination que la notification est associée à la deuxième application, et
en réponse à la détermination, la modification (210) d'un affichage de l'identifiant d'ensemble d'applications dans la zone désignée vers un affichage d'un identifiant d'application associé à la deuxième application.
